# EUROPEAN PATENT SPECIFICATION

(11) **EP 1 442 343 B1**
(45) Date of publication and mention of the grant of the patent: **14.05.2008**
(21) Application number: 02778519.5
(22) Date of filing: 11.10.2002
(51) Int. Cl.: G05D 7/06

(54) **SYSTEM AND METHOD FOR MAKING AND USING A MASS FLOW DEVICE**
SYSTEM UND VERFAHREN ZUR HERSTELLUNG UND VERWENDUNG EINER MASSENSTRÖMUNGSEINRICHTUNG
SYSTEME ET PROCEDE DE FABRICATION ET D'UTILISATION D'UN DISPOSITIF DE DEBIT DE GAZ

(30) Priority: 12.10.2001 US 329031 P; 28.08.2002 US 406511 P
(43) Date of publication of application: 04.08.2004
(73) Proprietor: Horiba Stec, Inc., Irvine, CA 92614 (US)
(72) Inventor: WHITE, William, W., Sparks, NV 89431 (US); WHITE, William, H., Washoe Valley, NV 89704 (US); MUDD, Daniel, T., Reno, NV 89523 (US); DAVIS, Christopher, B., Allen, TX 75002 (US); FONTAINE, Benjamin, Leominster, MA 01453 (US)
(74) Representative: Baker, Colin John
(86) International application number: PCT/US2002/032533
(87) International publication number: WO 2003/032101

(56) References cited:
- US-A- 4 096 746
- US-A- 5 080 131
- US-A- 5 190 068
- US-A- 5 311 762
- US-A- 5 868 159
- US-A- 5 899 962
- US-A- 5 911 238
- US-A- 5 944 048
- US-A- 6 119 710
- US-A- 6 152 162

## Description

### BACKGROUND

The present disclosure relates generally to flow systems, and more particularly, to a method for making and using a mass flow device.

Some effort has been put forth to develop precision fluid mass flow controllers, particularly flow controllers for controlling the mass flow rates of fluids, such as toxic and highly reactive gases, of the type used in the fabrication of semiconductor devices. In the field of semiconductor fabrication, various gases are used in etching and vapor deposition processes. These gases may be toxic to humans and may be highly reactive when exposed to ambient atmospheric conditions. Mass flow controllers have been developed which measure and control the flow rate of fluids of the above-mentioned type wherein the measurements are based on thermal properties of the fluids. Other fluid mass flow controllers have been developed which are based on measuring a pressure differential across a flow restrictor or orifice. The accuracy of prior art fluid mass flow controllers of the type in question here is inadequate for many applications of flow controllers.

Semiconductor fabrication processes may require the discharge of very precise quantities of fluids (primarily) gases) into a process chamber. For example, flow rates ranging from as high as twenty liters per minute to as low as a few tenths of one cubic centimeter per minute (CCM) may be required. Moreover, the response time and stabilization rate of flow controllers used to control reactive gases in semiconductor fabrication may require that the controller be able to react to an "on" signal and be stable at the required fluid flow rate in less than one second, and preferably much less than one second. The process itself may last anywhere from a few seconds to several hours. The ability for current fluid mass flow controllers to react and stabilize at such rates is difficult to achieve.

Another problem associated with the prior art pressure sensors and fluid mass flow controllers that use such pressure sensors is the amount of dead space inherent in their design. Typically, such mass flow controllers have a single entry/exit port that opens into a hollow chamber associated with each pressure transducer. Consequently, fluid flow in some areas of the bollow chamber can be severely restricted, resulting in large unswept internal volumes, long moisture dry down times, and poor purgability.
Another problem associated with prior art fluid mass flow controllers pertains to the requirements to calibrate the controllers for various process fluids. Prior art fluid mass flow controllers are typically calibrated using an inert or nontoxic calibration fluid which requires the development of conversion factors or conversion data sets. Since the use of toxic or highly reactive process fluids for calibrating each controller instrument is cost prohibitive and dangerous to operating personnel, prior art mass flow controllers are typically calibrated on an inert fluid, such as nitrogen or argon, or a fluid whose properties arc similar to the properties of the process fluid to be controlled by the mass flow controller. This process of using calibration fluids and conversion factors introduces errors into the operation of the mass flow controllers, is time consuming and thus expensive. The inaccuracy of prior art mass flow controllers and the expense and time required to calibrate controllers during initial setup, as well as in replacement procedures, adds substantially to the cost of many manufacturing processes, including the fabrication of semiconductor devices, to the point that certain improvements in fluid mass flow controllers have been highly desired.

Accordingly, several desiderata have been identified for pressure sensors and fluid mass flow controllers incorporating such pressure sensors, particularly of the type used in manufacturing processes as described above. Such desiderata include: controller accuracy within a few percent of controller setpoint (less than one percent is desired); operation at elevated or below "normal" temperatures and various positions or attitudes (i.e., right side up, sideways, or upside down), without loss of accuracy, such as experienced by thermal based mass flow controllers; accurate measurement and control over a wide range of flow rates; fast response time from turn-on to achieving stable flow conditions; economy of manufacture; and uncomplicated modular mechanical structure to facilitate servicing the flow controller and to facilitate changing the flow controller out of the fluid flow distribution system for the manufacturing process. Other features desired in fluid mass flow controllers include no requirement to calibrate each complete controller instrument at the time of manufacture or recalibrate the instrument after servicing, the provision of a reliable easily interchanged flow restrictor or orifice part, ease of verification of the operability and accuracy of the flow controller after servicing or change out of a flow restrictor, the ability to accurately control flow rates for a wide variety of toxic and/or reactive fluids, particularly the hundreds of fluids in gaseous form which are used in semiconductor fabrication processes, and ease of changing the controller working data for flow rates for different gases or fluids in liquid form.
Accordingly, what is needed is a system and method for making a mass flow device that is able to accurately measure or control one or more fluids across a diverse range of pressures and temperatures.

### SUMMARY

According to the present invention, there is provided a method for constructing a mass flow device according to Claim 1, and a device for controlling a flow of at least one fluid according to Claim 24.

A technical advance is provided by a novel method and system for making a mass flow device for use with at least one fluid. The method comprises selecting a restrictor, where the restrictor is associated with restrictor information offset parameters. The restrictor information is processed with behavioral data associated with the fluid to produce device parameters. The device parameters are downloaded into the device, enabling the device to monitor a flow of the fluid over a range of environmental conditions.

US 5,899,962 discloses a field mounted two-wire transmitter, which can measure variables representative of fluid flow rate, such as, gas flow through a pipe.

US 6,152,162 discloses a system for controlling fluid flow rate using pressure regulation rather than a control valve. The pressure drop across a restrictor is determined, and the fluid pressure is regulated to achieve the desired pressure drop.

### SUMMARY

According to the present invention, there is provided a method of manufacturing a mass flow device according to Claim 1, and a device for controlling a flow of at least one fluid according to Claim 24.

A technical advance is provided by a novel method and system for making a mass flow device for use with at least one fluid. The method comprises selecting a restrictor, where the restrictor is associated with restrictor information. The restrictor information is processed with behavioural data associated with the fluid to produce device parameters. The device parameters are downloaded into the device, enabling the device to monitor a flow of the fluid over a range of environmental conditions.

There is disclosed herein a method for providing a mass flow device with information which comprises identifying restrictor information associated with a restrictor and sensor information, associated with at least one sensor. The restrictor and sensor information defines properties of the restrictor and sensor, respectively. Behavioral information associated with the fluid is identified. The identified restrictor and sensor information is processed with the behavioral information to produce operational data for the device, enabling the device to control the fluid. The operational data is stored in a memory accessible to the device.

There is also disclosed herein a device for controlling a flow of at least one fluid which comprises a restrictor for restricting fluid flow, a processor, a valve accessible to the processor for controlling the fluid flow, at least one sensor for producing flow data representing the fluid flow, and a memory accessible to the processor. The memory includes device data associated with the restrictor, the sensor, and the fluid, and instructions for processing by the processor. The instructions are for receiving the flow data from the sensor, calculating a flow rate based on the received flow data and the device data, and actuating the valve. A degree of actuation is associated with the calculated flow rate.

### BRIEF DESCRIPTION OF THE DRAWINGS

Fig. 1 is a flowchart of an exemplary method for making a flow controller.
Figs. 2-6 illustrate an exemplary mass flow controller and various components that may be assembled using the method of Fig. 1.
Fig. 7 is a flow chart illustrating another embodiment of a method for making the mass flow controller of Figs.2-6:
Fig. 8 is a flow chart illustrating a method for obtaining fluid behavior data according to the method of Fig.7.
Fig. 9 is a three-dimensional graph illustrating behavior characteristics of an exemplary fluid that may be obtained by the method of Fig. 8.
Fig. 10 is a flow chart illustrating a particular method for obtaining certain component parameters according to the method of Fig. 7.
Fig. 11 is a flow chart illustrating a particular method for characterizing sensors according to the method of Fig. 7.
Fig. 12 is a flow chart illustrating a particular method for characterizing restrictors according to the method of Fig. 7.
Fig. 13 is a graph illustrating exemplary data points that may be obtained by the method of Fig. 12.
Fig. 14 is a flowchart summarizing the assembly of the flow controller of Figs. 2-6 for a particular fluid and flow rate.

### DETAILED DESCRIPTION

The present disclosure relates generally to flow systems, and more particularly, to a method for making and using a mass flow device. It is understood, however, that the following disclosure provides many different embodiments, or examples, for implementing different features of the invention Specific examples of components and arrangements are described below to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various embodiments and/or configurations discussed.

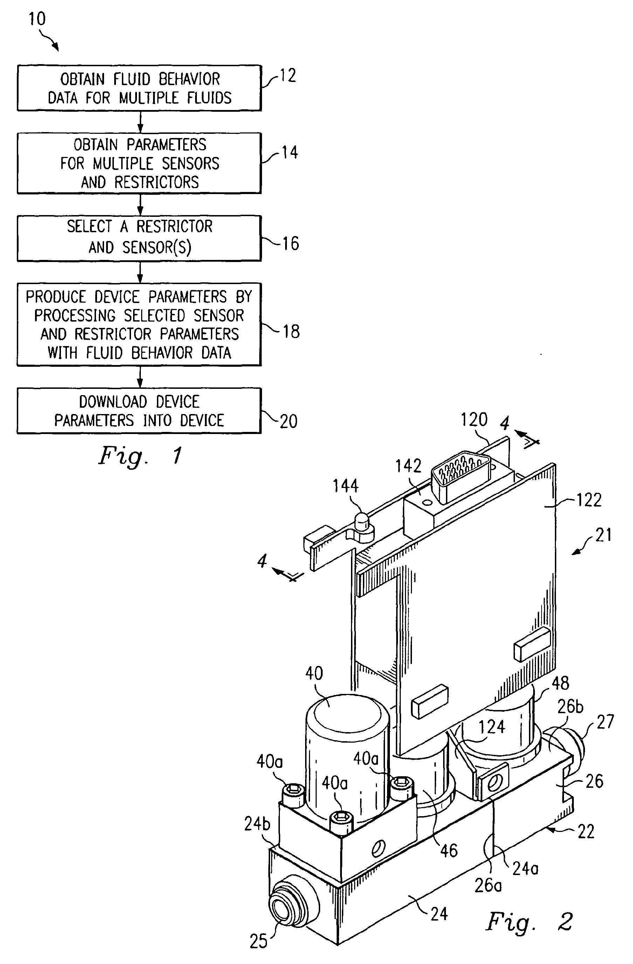

Referring to Fig. 1, a method 10 for making a flow control device (Figs. 2-6) is illustrated. It is understood that the method 10 may be equally applicable to other devices or components used in fluid flow systems, such as flow measurement devices. As will be described later in greater detail, the flow control device is operable to control a flow of one or more fluids over a range of environmental conditions that may impact the fluid's behavior. For example, variations in the fluid's pressure and/or temperature as well as the device's input and output pressures, may impact the flow of the fluid through the device. Moreover, the behavior of one fluid may vary differently than the behavior of another fluid due to differences in the fluids' properties. Accordingly, if the device is to maintain a desired flow rate for a particular fluid, the device should adjust the fluid flow in response to these variations. In step 12 of the method 10, fluid behavior data is compiled by experimentally determining the fluid's behavior at different pressures and/or temperatures. For example, data may be obtained at various pressure points as the pressure is increased from a vacuum (e.g., zero kPa, zero pounds per square inch (psi) or zero torr) to one atmosphere (e.g., 101.3 kPa, 14.7 psi or 760 torr). Additional data may be obtained at various temperature points to further define the fluid's behavior.

After the fluid behavior data is compiled in step 12, the method 10 continues to step 14, where parameters may be obtained for various components of the flow control device, such as sensors and restrictors. As will be described later in greater detail, sensors enable certain properties of the fluid flow (e.g., pressure or temperature) to be detected and restrictors serve to alter the fluid flow according to predefined restrictor properties. In the present example, the parameters for multiple sensors and restrictors are obtained and associated with the specific sensor or restrictor. For example, a set of parameters for a given restrictor may be obtained and then associated in a database with a unique serial number assigned to the restrictor.

In step 16, a restrictor and one or more sensors are selected for use in the flow control device. Because each sensor and restrictor is associated with a set of parameters, the behavior of the selected components is known and no special care is needed when making the selections. Continuing to step 18, the parameters of the restrictor are processed with the fluid behavior data. In other embodiments, the sensor parameters may also be processed with the fluid behavior data. In the present example, the flow control device is intended for use with a single fluid, but it is understood that fluid behavior data for a plurality of fluids may be processed. The processing results in device parameters that define the behavior of the device with respect to the fluid. The device parameters may be downloaded to the device (e.g., to a memory accessible to the device) in step 20. Accordingly, using one or more valves, the device may control the flow of the fluid using known relationships between the sensors, restrictor, and fluid. The method 10 enables the device to be created using different sensor/restrictor combinations and to operate with many different fluids, so long as the sensor/restrictor parameters and the fluids' behavior data are known.

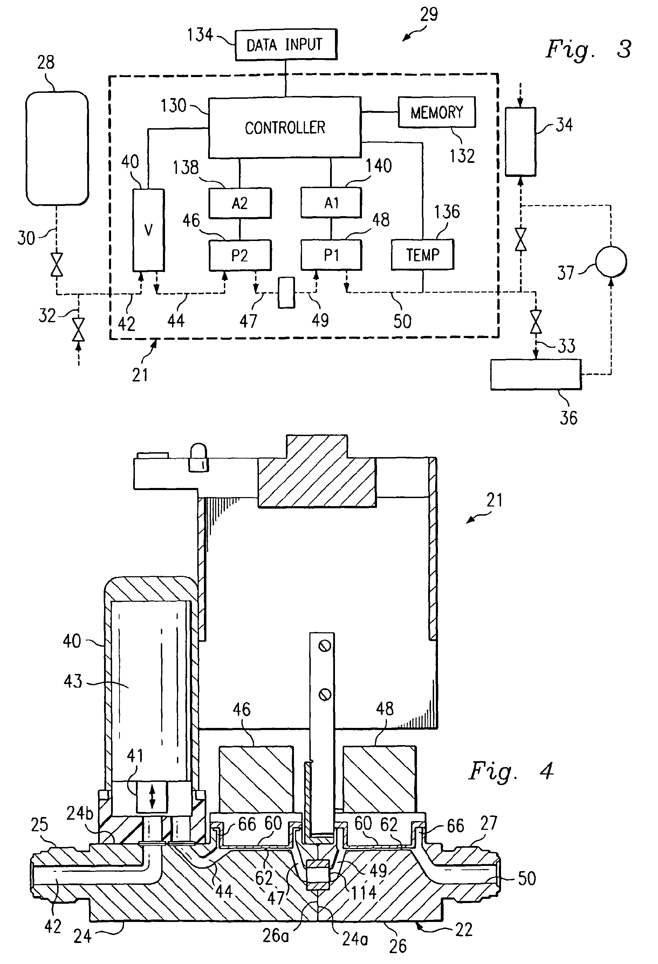

Referring now to Fig. 2, a fluid mass flow controller 21, such as may be created using the method 10 of Fig. 1, is illustrated. The mass flow controller 21 includes a two-part modular body 22 comprising generally rectangular block shaped first and second body portions 24 and 26 which may be suitably joined to each other by conventional mechanical fasteners (not shown) at cooperating planar faces 24a and 26a, respectively. The body portions 24 and 26 are provided with suitable connectors 25 and 27, respectively, for connection with suitable conduits of a fluid supply system, such as a semiconductor fabrication system 29 (Fig. 3) for supplying, in particular, toxic or reactive fluids in gaseous form for use in semiconductor fabrication, for example.

By way of example, and as shown in Fig. 3, the mass flow controller 21 may be interposed in a semiconductor fabrication system 29 including a source pressure vessel 28 for supplying fluid under pressure such as tungsten hexafluoride, chlorine, sulfur hexafluoride, or any one of more than 200 fluids that may be used in the fabrication process, for example. The source pressure vessel 28 is connected to the flow controller 21 via a suitable conduit 30. A purge conduit 32 is also connected to the conduit 30 and to a source of purge gas, not shown, for purging the flow controller to a suitable receiver or scrubber 34, when needed. During operation of the flow controller 21, however, a precise flow of fluid is controlled for entry into a semiconductor fabrication chamber or vessel 36 via conduit 33. The chamber 36 is typically maintained at a substantially reduced pressure by way of one or more vacuum pumps 37, for example. The system 29 in which the flow controller 21 is interposed, as shown in Fig. 3, is shown by way of example in simplified form to illustrate one preferred application of the flow controller. It will be understood that the flow controller 21 can be used in other systems.

Referring also to Figs. 3-6, the first body portion 24 supports an electrically controlled flow control valve 40 which is removably mounted on a face 24b of the first body portion 24 by conventional mechanical fasteners 40a. The flow control valve 40 is preferably of preassembled, modular construction so that it can be readily mounted on the first body portion 24 at a predetermined position so that no adjustment of the flow control valve 40 is needed once mounted. This is advantageous over prior art systems where the valve 40 is not modular, and therefore must be adjusted, which typically requires a relatively large amount of time. The valve 40 includes an electrically actuated closure member 41 (Fig. 4) operable to throttle the flow of fluid from a first internal passage 42 to a second internal passage 44 of the first body portion 24. The first internal passage 42 is in fluid communication with the conduit 30 for receiving fluid from the source pressure vessel 28. The valve 40 also includes an actuator 43 for moving the closure member 41 between a fully open and fully closed position. The actuator 43 is preferably of the solenoid or piezoelectric type for rapidly and precisely controlling the position of the closure member 41 between the fully open and closed positions with a high degree of resolution. A first pressure transducer 46 is also mounted on the face 24b of the first body portion 24 and is in fluid communication with the second internal passage 44 and a third internal passage 47 formed in the first body portion 24. A second pressure transducer 48 is mounted on a face 26b of the second body portion 26 and is in fluid communication with a first internal passage 49 and a second internal passage 50 formed in the second body portion 26. The second internal passage 50 is also fluidly connected to the conduit 33 leading to the fabrication chamber 36. A removable cover (not shown) maybe provided for housing the components of the fluid mass flow controller 21.

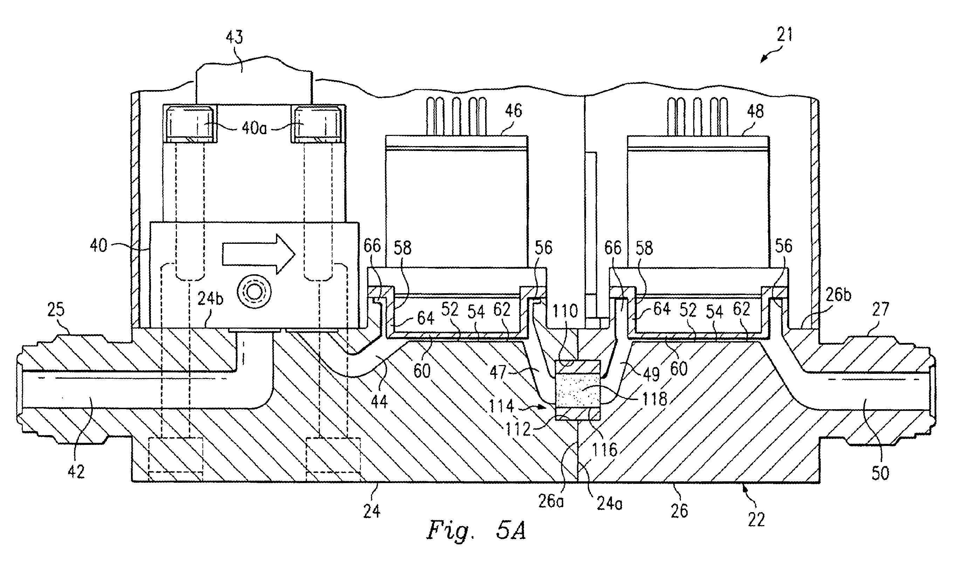

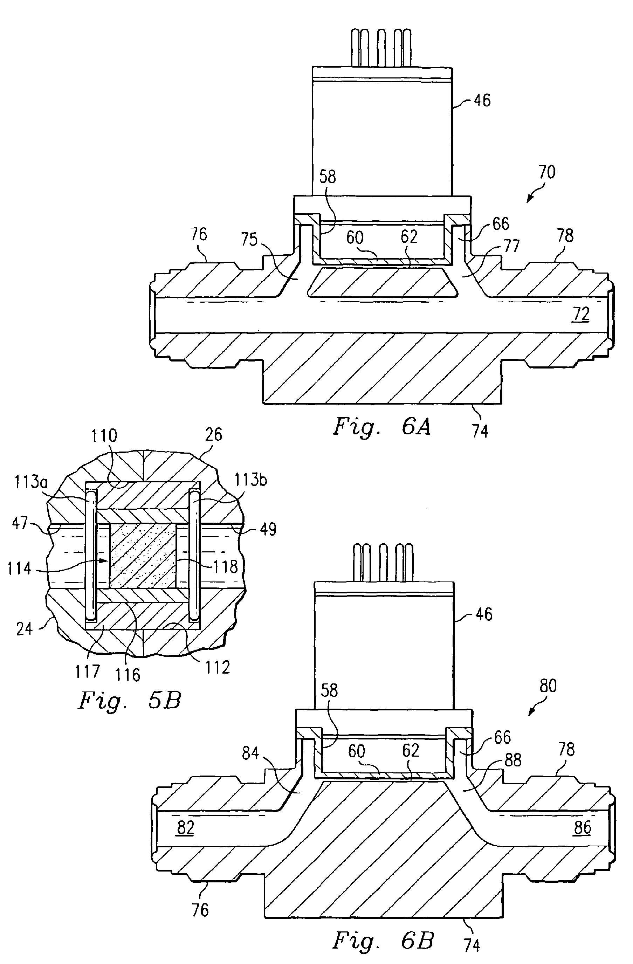

As shown most clearly in Fig. 5, a cylindrical depression 52 is preferably formed in each body portion 24 and 26. Each depression 52 preferably has a bottom wall 54 and a circumferentially extending side wall 56 that extends from the bottom wall. A cup-shaped diaphragm 58 is fixedly positioned in each depression. Each cup-shaped diaphragm has a lower diaphragm wall 60 that preferably extends closely adjacent and parallel with the bottom wall 54 to form a measurement gap 62, and an annular side wall 64 that preferably extends adjacent and parallel with the side wall 56 to form an annular flow path 66. The measurement gap 62 is approximately 0.08-0.51 m (0.003-0.020 inch) in height, and preferably about 0.25 mm (0.010 inch) in height, while the annular flow path 66 is preferably greater in height. The diaphragm wall 60 can be flat or corrugated, and is preferably formed of a thickness that exhibits flexibility when subject to fluid pressure. The thickness of the diaphragm wall 60 can vary depending on the fluid pressure ranges with which the diaphragm wall is exposed. For relatively small pressure ranges, the diaphragm wall can be relatively thin, whereas for relatively large pressure ranges, the diaphragm can be relatively thick For highly corrosive environments, the diaphragm 58, and especially the diaphragm wall 60, is preferably constructed of a corrosion resistant material, such as stainless steel, sapphire, Inconel, Alumina, ceramic, and the like. The pressure transducers 46 and 48 may be a resistive strain gage or capacitance type for measuring the amount of flexure in the diaphragm walls 60, and thus the fluid pressures within the mass flow controller 21.

With the above-described arrangement, fluid flow through the annular flow path 66 is substantially unimpeded, while fluid flow through the measurement gap 62 is restricted, thereby dampening turbulent fluid flow that may be present in the annular flow path 66 and reducing noise that is prevalent in prior art solutions. The measurement gap 62 and the annular flow path 66 also assure that the fluid is clean swept through these volumes. Accordingly, dead space within these volumes is eliminated, leading to better purgability and quicker dry down times. Preferably, the annular flow path 66 of the first body portion 24 is smaller in width than the annular flow path 66 of the second body portion 26, since the fluid flow rate in the first body portion will normally be lower than the fluid pressure in the second body portion due to the normally higher fluid pressure in, the first body portion. In this manner, the lag time for shutting off or starting up fluid flow can be reduced.

The body portions 24, 26 are preferably constructed of thermally conductive material, such es stainless steel, aluminum, or the like, and therefore serve to heat or cool the fluid passing therethrough. Since the diaphragm wall 60 is positioned relatively close to its respective body portion 24 or 26, the temperature of the diaphragm wall 60 is less affected by fluid temperature, thereby increasing measurement accuracy over prior art systems.

With reference now to Fig. 6A, a pressure sensor 70 according to a further embodiment of the invention is illustrated, wherein like parts in the previous embodiment are represented by like numerals. The pressure sensor 70 is similar in construction to the body portions 24 and 26 Previously described with the exception of a main internal passage 72 that extends through a body portion 74 between a first conduit connector 76 and a second conduit connector 78. The main internal passage 72 is fluidly connected to a first internal passage 75 and a second internal passage 77. The first and second internal passages 75, 77 are in turn in fluid communication with the measurement gap 62 and the annular flow path 66, as in the previous embodiment. This embodiment is especially advantageous for measuring pressures of fluids traveling at relatively high flow rates, where some of the fluid bypasses the pressure measurement chamber, thereby reducing turbulent flow that may otherwise occur.

It will be understood that the body portions 24 and 26 of the mass flow controller 21 can be modified in a similar manner to include the main internal passage 72 for measuring and controlling relatively high flow rates.

With reference now to Fig. 6B, a pressure sensor 80 according to an even further embodiment of the invention is illustrated, wherein like parts in the previous embodiment are represented by like numerals. The pressure sensor 80 is similar in construction to the pressure sensor 70, with the exception that the main internal passage 72 is replaced with a first internal passage 82 that is in fluid communication with a second internal passage 84 and a fourth internal passage 86 that is in fluid communication with a third internal passage 88. The second and third internal passages 84, 88 are also in fluid communication with the measurement gap 62 and the annular flow path 66, as in the previous embodiment. This embodiment is preferably used for measuring pressure of fluids that move at a lower flow rate than the previous embodiment.

Referring again to Figs. 4, 5A, and 5B, the first body portion 24 preferably includes a first cylindrical counterbore 110 that is concentric with the third internal passage 47 of the first body portion 24, and the second body portion 26 preferably includes a second cylindrical counterbore 112 that faces the first counterbore 110 and is concentric with the first internal passage 49 of the second body portion 26. A flow restrictor 114 is preferably positioned in the first and second counterbores 110, 112. The flow restrictor 114 comprises a disk 118 of material that may be supported in a tubular sleeve 116. The sleeve 116 may be mounted in a suitable tubular adapter and supported in the counterbores 110, 112 between seal rings 113a, 113b. Accordingly, the flow restrictor 114 may be easily removed from the body 22 by separating the body portions 24 and 26, removing the flow restrictor 114 and replacing the flow restrictor with a suitable replacement restrictor of the same flow characteristics or of different flow characteristics. The disk 118 preferably comprises a sintered metal material having a predetermined porosity for allowing fluid to flow therethrough by providing restriction to flow sufficient to create a differential pressure thereacross which may be sensed by the pressure transducers 46 and 48. The flow restrictor 114 may, for example, be fabricated of stainless steel or nickel particles suitably compressed and sintered to provide the desired porosity and flow restriction properties. The flow restrictor 114 is advantageously disposed in the flow controller 21 downstream of the control valve 40. It will be understood that the flow restrictor 114 can be constructed of other materials.

According to the invention, the flow restrictor 114 can be arranged to serve as both a restrictor and a fluid filter so that a separate upstream or downstream fluid filter can be eliminated. With a typical restrictor, a controlled pressure drop is specified without regard to filtration properties. With a typical filter, filtration properties are specified without regard to a controlled pressure drop. Thus, the flow restrictor 114 of the present invention can be constructed to have both a controlled pressure drop and specified filtration properties for the particular fluids that will pass therethrough.

Other embodiments of a flow restrictor that may be used with the flow controller 21 are described in U.S. Provisional Patent Application Ser. No. 60/406,511, filed on August 28, 2002.

A slot (not shown) may be located in the first body portion 24 to allow the insertion of a temperature probe 136 (Fig. 3) into a space proximate to the counterbore 110 to detect the temperature of the flow restrictor 114. A temperature signal obtained from the temperature probe 136 may be used in a control circuit (Fig. 3) to allow restrictor characterization information to be used based on the actual temperature of the fluid.

Referring again to Figs. 2 and 3, the flow controller 21 preferably further comprises a control circuit or system mounted on a pair of spaced printed circuit boards (PCBs) 120, 122 that are secured to a mounting bracket 124 that extends from, the body 22. The control circuit includes a microcontroller or microprocessor characterized as a digital signal processor (DSP) 130 which is operably connected to a non-volatile memory 132, such as an EEPROM, and a data input device 134. The processor 130 is operably connected to the valve 40 for effecting movement of the closure member 41 (FIG. 3) between the closed and open positions. The processor 130 is also operably connected to the pressure transducers 46 and 48 via signal amplifiers 138 and 140, respectively, and to a temperature sensor 136 which may be located to sense the temperature of fluid flowing through the controller 21 at a predetermined location. The microcontroller 130 is also operably connected to a suitable interface, such as a plug connector 142 (FIG. 1) for receiving command signals, data sets and programming changes from various sources. An indicator light emitting diode (LED) 144 can be provided for displaying when the flow controller 21 is in operation.

The processor 130 is preferably a TMS320 LF2406 fixed point microcontroller available from Texas Instruments Incorporated. However, it will be understood that other fixed point or floating point processors can be used without departing from the scope of the present invention. The pressure sensors 46 and 48 preferably operate in a plus/minus 0.5 Volt range with fourteen to sixteen bit resolution as analog inputs to the processor 130, which carries its own A/D and D/A converters. Other analog inputs will be for the temperature sensor 136 and a zero to five volt set point command signal input with twelve bit resolution (not shown). The processor 130 may also provide analog output signals for controlling operation of the valve 40 via a valve driver (not shown). Communication with the processor 130 may be via an RS485 4-wire communication link and/or a CAN (Controller Area Network), although other communication means can be used. The processor 130 is also preferably capable of supporting a Joint Test Action Group (JTAG) interface for emulation and debug and a powerup bootloader function for programming. The memory 132 preferably comprises a serial Electrically Erasable Programmable Read Only Memory (EEPROM) of at least 32 Kbytes.

The processor 130 preferably operates a closed loop control function that is executed at a rate of about two hundred times per second between the inputs for the pressure sensors 46 and 48 and the output signal for controlling the valve 40. Communication through the interface 142 is carried out while the control loop is functioning although new data transfer or transfer to the memory 132 may be supplied when control loop updates are not being maintained.

Each of the components of the flow controller 21 may include an identification code, such as a serial number. For example, the flow controller 21 may have a unique serial number, as may the valve 40. transducers 46, 48, restrictor 114, PCBs 120,122, DSP 130, memory 132, and temperature sensor 136. These serial numbers may be entered into a database or other storage means so that the components associated with the particular flow controller 21 can be easily identified. As will be described later in greater detail, the database may also include information regarding each component, such as is described in U.S. Provisional Patent Application Ser. No. 60/329,031, filed on October 12, 2001.

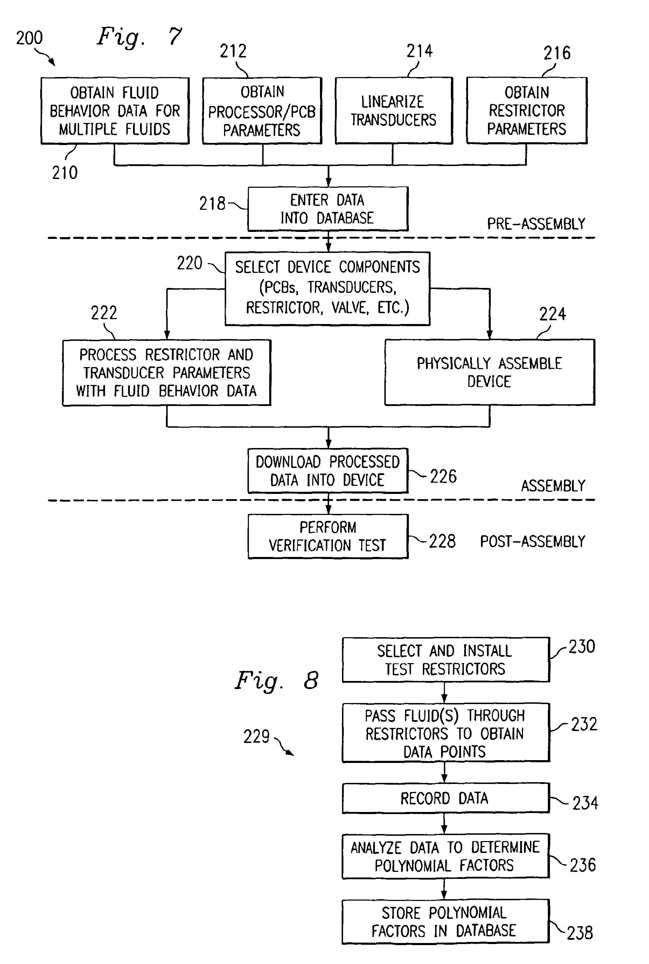

Referring now to Fig. 7, a method 200 for making the flow controller 21 of Figs. 2-6 is illustrated. The method 200 is operable to take a variety of flow controller components from an unassembled state to an assembled state using steps 210-228 that are divided into pre-assembly, assembly, and post-assembly stages. The stages of pre-assembly, assembly, and post-assembly are illustrative only and serve to clarify one assembly approach. It is understood that the order of the following steps may vary and that some steps may be automated. Furthermore, certain steps may utilize a batch processing mode to process multiple components of the same type.

In steps 210-218, pre-assembly in the method 200 includes obtaining a variety of information needed to program the flow controller 21 and storing the information in one or more databases. These steps include defining both fluid behavior (step 210) and parameters for physical components that are to be used in the flow controller 21 (steps 212-216).

Referring now to step 210 of Fig. 7 and with additional reference to Fig. 8, fluid behavior data is experimentally determined for multiple fluids. Fluid behavior may be altered by variations in pressure and temperature. Generally, a fluid held at a constant temperature and passed through an orifice (e.g., a restrictor) may exhibit a relatively linear relationship between mass flow rate and differential pressure (e.g., downstream pressure/upstream pressure) at certain mass flow rate/pressure differential ratios. This linear region is termed a "choked flow" region and may occur, for example, when the ratio of the mass flow rate to the differential pressure is above 1.6:1. During choked flow, the fluid velocity reaches sonic velocity (e.g., the speed of sound) and further increases in the upstream pressure do not cause a corresponding increase in fluid velocity through the orifice. However, the mass flow rate may continue to increase linearly with increasing upstream pressure. This is because the increasing upstream pressure results in greater fluid density, which directly impacts the mass flow rate. Because of the linear relationship, designing and using flow controllers to control mass flow rates for fluids in the choked flow region may be relatively easy compared to controlling fluids in a non-choked flow region (e.g., when the ratio of the mass flow rate to the differential pressure is below 1.6:1).

In the non-choked flow region, the relationship between flow rate and differential pressure may be non-linear and so may be more difficult to control. However, flow control in the non-choked flow region may be of particular interest in certain industries, such as the semiconductor processing industry. Furthermore, some fluids in certain applications may be usable only in the non-choked flow region and so control in the choked flow region may be largely irrelevant. For example, a fluid may change from a gas in the non-choked flow region to a liquid in the choked flow region and so using the fluid in its gaseous form may require non-choked flow operation. Accordingly, the accurate measurement and control of fluids in the non-choked flow region is desirable and, as illustrated in Fig. 8, data should be collected to model the behavior of a variety of fluids. This data is important in identifying how variations in pressure and temperature affect the flow of a fluid through a restrictor of a given size (measured in SCCM). As different fluids have different properties, the behavior of each fluid that may be used by the flow controller 21 should be determined.

Referring now solely to Fig. 8, the process 229 of collecting fluid behavior data begins in step 230 with the selection and installation of a certain number (e.g., twelve) restrictors. In step 232, one or more fluids are passed through the restrictors to obtain data points representing the fluids' behavior for certain combinations of differential pressure, downstream pressure, and temperature. For purposes of illustration, testing a fluid may include subjecting the fluid to pressures ranging from a vacuum to one atmosphere and gathering data at specified pressure points (e.g., fourteen points in the present example). It is noted that a majority of these data points may be located in the non-choked flow region, as the fluid's behavior may be predicted using fewer data points in the choked flow region. Additional data may be obtained by varying the temperature of the fluid. These variations may be performed on a variety of restrictors to define the fluid's behavior with respect to a particular restrictor design. Accordingly if three temperatures and twelve restrictors are used with fourteen pressure measurements, a total of 14 x 3 x 12 = 504 data points may be sampled to define the behavior of a single fluid. The behavior of additional fluids may then be defined in a similar manner. In the present example, a total of thirty-two fluids are so defined with thousands of data points. These data points may be used to determine the flow of a fluid through a given restrictor in both the choked flow and non-choked flow regions.

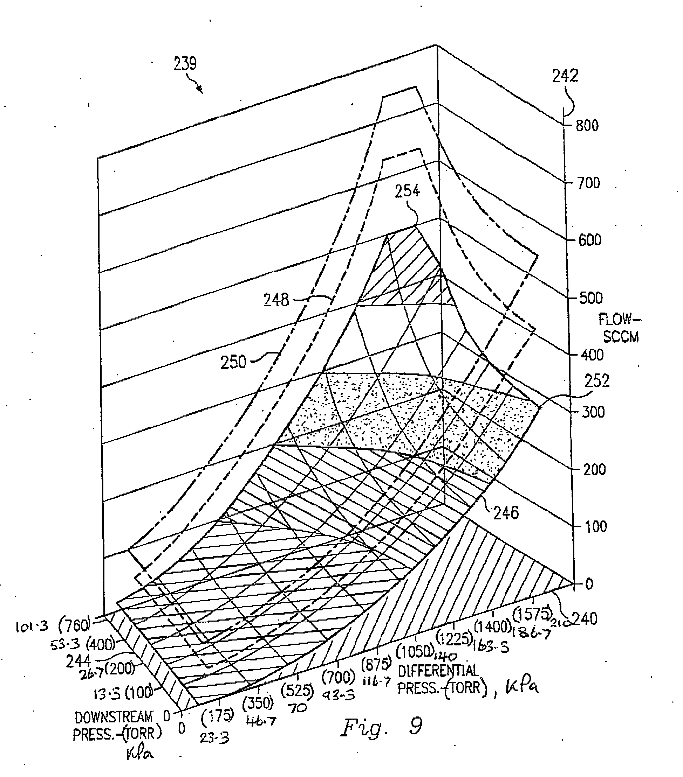

Continuing with the process of Fig. 8, in step 234, the data obtained by the testing process is recorded. The recorded data is then analyzed in step 236 to produce best fit and interpolation equations to define additional points on a three dimensional graph (Fig. 9). The analysis results in polynomial factors for each fluid that can be interpolated to provide the behavior of a particular gas with a particular restrictor. In step 238, the polynomial factors are stored in a database.

One aspect of the present invention resides in the discovery that, in a normal operating range of the mass flow controller 21, the fluid flow rate is a function not only of the differential pressure across the flow restrictor 114 but also the absolute downstream pressure corresponding substantially to the pressure in the fabrication chamber 36. This relationship is discussed in detail in U.S. Patent Application No. 09/666,039, filed on September 20, 2000.

Referring now to Fig. 9, the relationship between flow rate and absolute downstream pressure is illustrated by a graph 239, which shows the dependence of flow rate (represented by z-axis 242 in units of SCCM) on downstream pressure (represented by y-axis 244 in units of torr) and differential pressure (represented by x-axis 240 in units of torr). The graph 239 also includes three surfaces 246, 248, 250, each of which indicates a different fluid temperature.

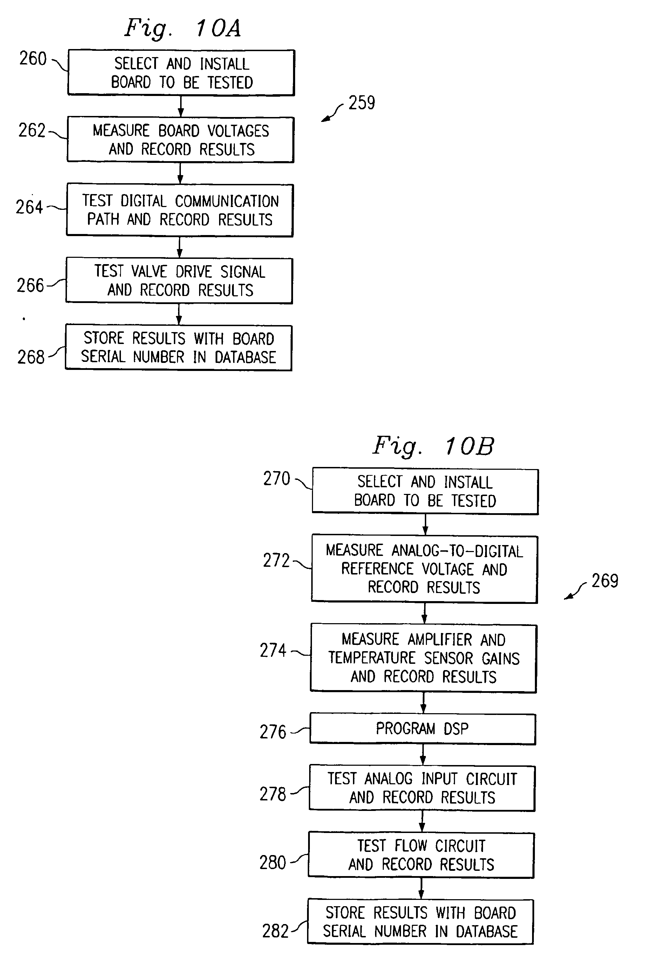

While the mass flow rate across a flow restrictor varies with the differential pressure, absolute downstream pressure, and temperature, it is noted that the relationship, between, upstream pressure, downstream pressure and flow rate is not a linear relationship. For example, if the downstream pressure is approximately 0 kPa (0.0 torr) and the pressure differential across the flow restrictor is approximately 310 kPa (1575.0 torr) the flow rate for the particular restrictor tested is about 280 SCCM (indicated by a data point 252). However, if the downstream pressure is 101.3 kPa (760.0 torr), then the flow rate for the same pressure differential (e.g., 310 kPa (1575.0 torr)) across the flow restrictor is approximately 500 SCCM (indicated by a data point 254). Referring now to step 212 of Fig. 7 and with additional reference to Figs. 10A and 10B, parameters are obtained for the PCBs 120, 122, and the DSP 130. For example, a bed of nails (BON) test may be used to determine gain values SP1, SP2 of amplifiers associated with the DSP. Similarly, a BON test may be used to determine voltages of the PCBs 120, 122, such as variances from ideal values of +5 volt (V), +3.3 V, and/or +3.0 V (which may be the DSP reference voltage). The variations impact the performance of the flow controller 21 and so should be taken into account in order to achieve the desired level of fluid control. As will be described later, these parameters enable corrections to be made for variations between the ideal component values and the actual component values.

Referring now specifically to Fig. 10A, an analog or digital input/output (I/O) board may be tested using a method 259 as follows. In step 260, a board is selected and installed for testing. Voltages associated with the board are measured using a pass/fail standard in step 262 and the results are recorded. In step 264, a digital communication path is tested using a pass/fail standard and the results are recorded. A valve drive signal (e.g., a signal used to-drive the valve 40 of Fig. 2) is also tested as pass/fail in step 266. The results of each test are then stored in a database with a serial number associated with the tested board in step 268.

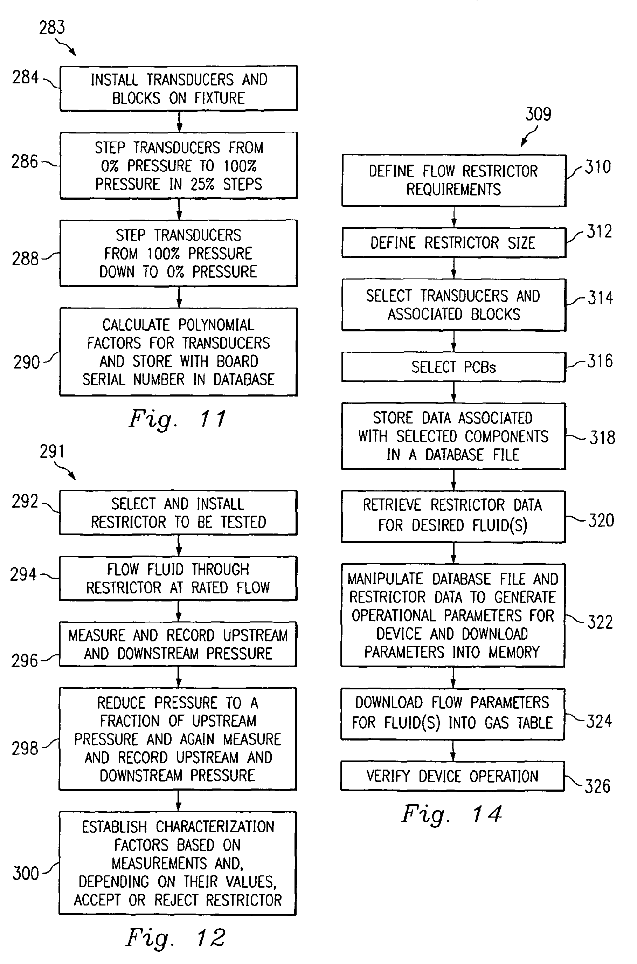

Referring now specifically to Fig. 10B, a DSP board may be tested using a method 269 as follows. In step 270, a board is selected and installed for testing. A measurement of the 3V analog-to-digital reference voltage is taken and recorded in step 272. In step 274, gains SP1 and SP2 associated with each of the amplifiers A1, A2 (Fig. 3) are measured and recorded, as is a gain associated with the temperature sensor 136 (Fig. 3). The DSP is then programmed in step 276 and the analog input circuit is tested in step 278. Testing of a flow circuit associated with the DSP board occurs in step 280. The results of each test are then stored in a database with a serial number associated with the tested board in step 282. Referring now to step 214 of Fig.7 and with specific reference to method 283. of Fig. 11, the transducers 46,48 are characterized are follows. In step 284, the transducers and associated blocks are selected and installed on a fixture. Each transducer is then stepped through a range of pressures from zero percent pressure to one hundred percent pressure in twenty-five percent increments and then back down from one hundred percent pressure to zero percent pressure in steps 286,288, respectively, to obtain a response curve and a hysteresis value. For example, each transducer may be exposed to pressures ranging from. zero to 345 kPa (zero to 345 kPa) (using 86.2 kPa (12.5 psia) increments) and then back down from 345 to 0 kPa (fifty to zero psia). The response can then be curve fitted to polynomial factors A₀, A₁, and A₂ in step 290 and the polynomial factors can be stored with the serial number associated with the relevant transducer. The factors may then be used by the DSP 130 to calculate the absolute pressure sensed by each transducer 46, 48. As stated previously, this process aids in the identification of variances in the transducers and enables the flow controller 21 to account for the variances when determining absolute pressure.

Referring now step 216 of Fig. 7 and with additional reference to method 291 of Fig. 12, a "short test" may be executed with respect to each of a plurality of restrictors of different sizes, such as the twelve restrictors used in step 210. The short test serves at least two purposes by defining characteristics for "standard" restrictors and establishing a baseline against which other restrictors (e.g., batches of restrictors produced at different times by manufacturers) can be measured.

In the present example, twelve different sizes (in SCCM) of restrictors may be identified for purposes of defining restrictor characteristics. For each size, a certain number of restrictors (e.g., one hundred) may be selected and tested to determine an average flow rate. In the present example, two data points are collected for a set of three fluids, which is a subset of the fluids whose behaviors were characterized in step 210. For example, a first test may measure the pressure drop of a restrictor at a rated flow. This determines a factor Q1, which has a value from 0-99 (with an ideal value of 50), A second test is then performed to measure the pressure drop of the restrictor at a fraction (e.g., one half) of the rated flow. Using Q1, the zero intercept, and the result of the second test, a factor Q2 can be determined, which also has a value from 0-99 (with an ideal value of 50). Accordingly, Q1 and Q2 characterize the restrictor's behavior. Once the restrictor's behavior has been determined, an allowable range may be identified, such as plus or minus ten percent. The allowable range may identify a range of flows that are correctable by an assembled flow controller. Any restrictors used in assembling the flow controller 21 will be subjected to the short test and will either fall into an acceptable range (e.g., have Q1 and Q2 values in the range 0 to 99) or be rejected.

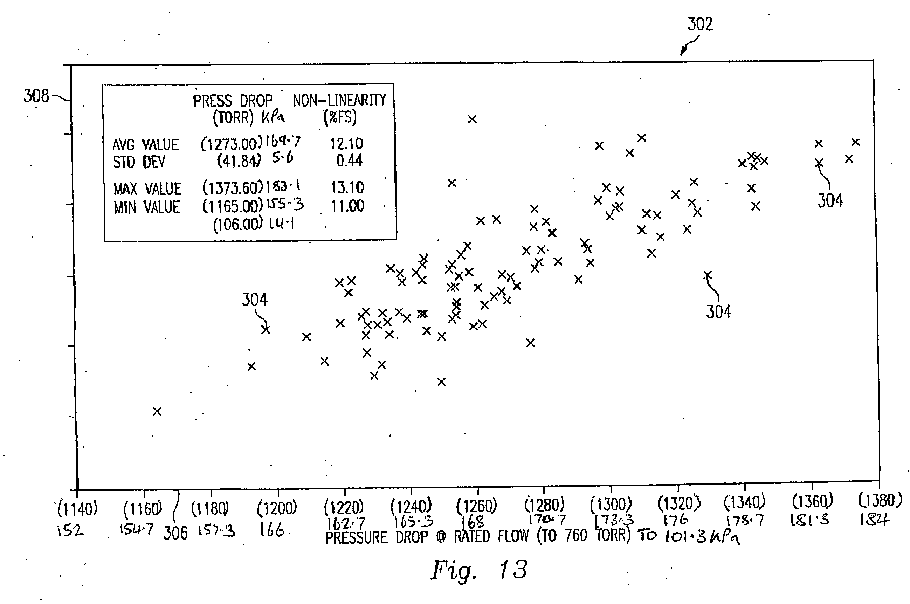

Referring now specifically to Fig. 12, a restrictor is selected and installed for testing in step 292. In step 294, a fluid (e.g., nitrogen) is flowed through the restrictor at a rated flow (e.g., 100 SCCM). The upstream and downstream pressures arc measured and recorded in step 296. In step 298, the pressure is reduced to a fraction (e.g., one half) of the upstream pressure and the upstream and downstream pressures are again measured and recorded. Using the fluid behavior data previously obtained (step 210 of Fig. 7), values for Q1 and Q2 are established for the restrictor in step 300. It is noted that the restrictor is rejected if the Q1 and Q2 values are outside of the accepted range. After the short test has been performed on a restrictor, the restrictor may be represented as a data point in a two-dimensional array having axes of pressure and linearity (Fig. 13).

Referring now to Fig. 13, a graph 302 includes one hundred and six data points 304 illustrating information that maybe plotted in the process of measuring pressure and non-linearity characteristics of a typical group of 100 SCCM restrictors. The graph 302 includes an x-axis 306 representing pressure drop (with a range of 152 to 184 kPa (1140 to 1380 torr)) and a y-axis 308 (with a range of 10.5 to 13.5) representing non-linearity. Thus, each data point represents a restrictor having a particular combination of pressure drop and non-linearity. This data can be used to establish a Q1 and Q2 value for each restrictor. For example, in the graph 302, a restrictor having values of Q1 = 50 and Q2 = 50 would have a pressure value of 1273 torr and non-linearity of 12.1% of full scale.

Referring now solely to Fig. 7 and continuing to step 218, the data obtained in steps 210-216 may be entered into one or more databases. It is understood some of the data may only be obtained a single time. For example, the fluid behavior data for a given fluid need only be obtained a single time and stored in the database. It will then be available for future use. Similarly, each component (e.g., PCB, DSP, transducer, restrictor, etc.) may be tested a single time, although a plurality of components may be tested during a given test cycle. The data representing the components may be associated with a particular component by a unique identifier, such as a serial number. It is noted that some component parameters may be identified during or after manufacturing and then shipped with the component. This enables the acquisition of components having predetermined parameters and so removes the necessity of determining the parameters during assembly of the flow controller 21.

In step 220, the PCBs, DSP, transducers, restrictor, valve, etc., are selected for the flow controller 21. Because each component is associated with predetermined parameters, selecting components that meet highly specific criteria is not necessary. For example, if a particular fluid is to be used, it is not necessary to select components, that meet narrow restrictions as long as the parameters for each selected component fall within a predetermined range of acceptable values. This enables a restrictor to be selected by size, rather than attempting to find a restrictor with specific values of Q1 and Q2.
In step 222, the restrictor and transducer parameters are processed with the fluid behavior data to generate device parameters. The processing compiles the information obtained in the preceding steps to enable the processor to account for voltage variations, restrictor characteristics, transducer parameters, and the behavior patterns for the particular fluid. This produces a best fit using A₀, A₁, A₂, B_{Backpressure}. Intercept, and similar information. As this information may differ by fluid for a particular flow controller, the processing may be performed for each fluid that is to be controlled by the flow controller.
In step 224 (which may parallel step 222 as illustrated in Fig. 7), the device is physically assembled as described previously and, in step 226, the device parameters are downloaded into the device. In the post-assembly stage of step 228, a verification test is performed on the device to ensure correct operation. Referring now to Fig. 14, a method 309 summarizes the assembly process as described in steps 220-228 of Fig. 7 with respect to the flow controller 21 of Figs. 2-6. In step 310, requirements are defined for the flow controller 21 (e.g., 500 SCCM full scale flow of BCl3 with an inlet pressure of 172.4 kPa (25 Psi) and outlet into a process chamber working at 13.3 Pa (100 millitorr)). In step 312, a restrictor size is defined (e.g., a 1000 SCCM Nitrogen) for the restrictor 114. It is noted that any 1000 SCCM unit can be used once the Q1 and Q2 parameters are recorded. The valve 40 is selected to have an orifice capable of flowing the fluid, but the valve does not need to be characterized beyond this parameter. In step 314, the transducers 46, 48 and base blocks to be used are selected. Also selected are inlet blocks for a low flow model if the required flow rate is below 250 SCCM Nitrogen equivalent. Both inlet and outlet blocks should have high flow modifications for flow rates above 3 SLM Nitrogen equivalent. These selections do not affect the characterization of the transducers welded to these blocks. Curve fit factors for each transducer should be recorded for the flow controller 21.

In step 316, the PCBs (e.g., the I/O board and DSP board) are selected and the voltages and gain values are recorded for the flow controller 21. In step 318, the recorded data is stored in a device database file associated with the flow controller 21. Polynomial data from a restrictor database for the selected gas and restrictor size is acquired in step 320. A manipulation program takes the collected data recorded in the device database file and polynomial data from the restrictor database and generates data files to set parameters for the operation of the flow controller 21 in step 322. The data files are then downloaded into the memory 132 to allow the DSP to control the flow of the flow controller 21. Parameters for nitrogen flow control may also be downloaded into a gas table for the flow controller 21 in step 324. In step 326, the operation of the flow controller 21 is verified by flowing nitrogen with the finished flow controller 21 to certify the response and accuracy of the device.

While the invention has been particularly shown and described with reference to the preferred embodiment thereof it will be understood by those skilled in the art that various changes in form and detail may be made therein without departing from the scope of the invention.

## Claims

1. A method for constructing a mass flow device for use with at least one fluid, the method comprising:
selecting a restrictor, wherein the restrictor is associated with restrictor information and comprises a disk of material, wherein the disk comprises a metal material having a predetermined porosity for allowing fluid to flow therethrough;
selecting a temperature sensor for sensing the temperature of the fluid flow through the device and producing a temperature signal;
selecting at least one sensor for measuring pressures of fluids; selecting a valve for controlling the fluid flow;
processing the restrictor information with behavioural data associated with the fluid to produce device parameters; and
downloading the device parameters into the device, wherein the device parameters and the temperature signal enable the device to monitor and control a flow of the fluid over a range of environmental conditions.

2. The method of Claim 1 further comprising obtaining the behavioural data by experimentally determining a behaviour of the fluid at a plurality of absolute downstream pressures, differential pressures, and temperatures.

3. The method of Claim 2 wherein the experimentally determined behaviour is determined using a test restrictor having a known flow rate.

4. The method of Claim 1 wherein the restrictor is selected by size from a plurality of restrictors.

5. The method of Claim 1 further comprising executing a restrictor test to determine the restrictor information for the selected restrictor.

6. The method of Claim 5 wherein executing the restrictor test includes:
obtaining a first value by testing the restrictor at a rated pressure;
obtaining a second value by testing the restrictor at less than the rated pressure; and
using the first and second values to identify the restrictor information,
wherein the first and second values enable characterization of the restrictor behaviour.

7. The method of Claim 6 wherein the first and second values are the restrictor information.

8. The method Claim 6 further comprising finding a best fit of the restrictor information with the behavioural data.

9. The method of Claim 1 further comprising selecting at least one sensor associated with sensor parameters, wherein the sensor parameters are determined by calculating a response curve and a hysteresis value obtained by testing the sensor over a range of pressures.

10. The method of Claim 1 wherein the range of environmental conditions includes a plurality of absolute downstream pressures.

11. The method of Claim 1 wherein the range of environmental conditions includes a plurality of differential pressures.

12. The method of Claim 1 wherein the range of environmental conditions includes a plurality of temperatures.

13. The method of Claim 1 further comprising selecting the fluid from a plurality of fluids, so that the component and restrictor information are only processed with behavioural data associated with the selected fluid.

14. The method of Claim 1 further comprising;
identifying restrictor information associated with the restrictor and sensor information associated with the least one sensor, wherein the restrictor and sensor information define properties of the restrictor and the at least one sensor, respectively;
identifying behavioural information associated with the fluid;
processing the identified restrictor and sensor information with the behavioural information to produce the device parameters for the device, wherein the device parameters and the temperature signal enables the device to control the fluid; and
storing the operational data in a memory accessible to the device.

15. The method of Claim 14 further comprising verifying the operational data by executing a test, wherein the test uses at least one known fluid value to measure an accuracy level of the device.

16. The method of Claim 14 further comprising retrieving the restrictor, sensor, and behavioural information from at least one database.

17. The method of Claim 14 wherein the behavioural information includes data representing a behaviour of the fluid over a range of absolute downstream pressures, differential pressures, and temperatures.

18. The method of Claim 17 wherein a relationship between a mass flow rate of the fluid and a differential pressure of the device is non-linear.

19. The method of Claim 1, further comprising characterizing the restrictor with respect to a flow of at least one fluid, the method comprising:
measuring a first pressure drop of the restrictor at a rated flow of the fluid;
calculating a first factor based on the measured pressure drop;
measuring a second pressure drop of the restrictor at a fraction of the rated flow; and
calculating a second factor based on the second pressure drop, wherein the first and second factors characterize a behaviour of the restrictor.

20. The method of Claim 19 wherein calculating the second factor is also based on the first factor and a zero intercept.

21. The method of Claim 19 wherein the fraction of the rated flow is one half of the rated flow.

22. The method of Claim 19 further comprising rejecting the restrictor if at least one of the first and second factors lies outside of a predetermined range.

23. The method of Claim 19 further comprising representing the restrictor as a data point in a two-dimensional array having a first axis representing pressure and a second axis representing linearity, wherein one of the first and second factors is associated with the first axis and the other of the first and second factors is associated with the second axis.

24. A device for controlling a flow of at least one fluid, the device comprising:
a restrictor for restricting the fluid flow wherein the restrictor comprises a disk of material; wherein the disk comprises a metal material having a predetermined porosity for allowing fluid to flow therethrough;
a processor;
a valve accessible to the processor for controlling the fluid flow;
at least one sensor for producing flow data representing the fluid flow;
wherein the at least one sensor comprises a temperature sensor for measuring the temperature of the fluid flow and producing a temperature signal; and
wherein the at least one sensor comprises a pressure sensor for measuring pressures of fluids;
a memory accessible to the processor, wherein the memory includes:
device data associated with the restrictor, the sensor, and the fluid; and
instructions for processing by the processor for receiving the flow data from the sensor, calculating a flow rate based on the received flow data and the device data, and actuating the valve, wherein a degree of actuation is associated with the calculated flow rate.

25. The device of Claim 24 wherein the device data includes processed information identifying a relationship between physical parameters of the restrictor and behavioural characteristics of the fluid.

26. The device of Claim 24 further comprising a housing operable to receive a sensor, wherein the sensor includes a bottom surface and a side surface, the housing defining:
first and second passages in fluid communication for providing a flow path for the fluid through the device; and
a cavity disposed between the first and second passages and substantially filled by the sensor, wherein the flow path is defined through the cavity by a first gap defined by a side surface of the cavity and the side surface of the sensor, and by a second gap defined by a bottom surface of the cavity and the bottom surface of the sensor, so that the fluid flows from the first passage into the cavity and from the cavity into the second passage in a substantially unswept manner.

## Patentansprüche

1. Verfahren zum Konstruieren einer Massenflusseinrichtung zur Verwendung mit mindestens einem Fluid, wobei das Verfahren Folgendes aufweist:
Auswählen einer Drossel, wobei der Drossel Drosselinformationen zugewiesen sind und eine Scheibe aus einem Material aufweist, wobei die Scheibe ein Metallmaterial mit einer vorbestimmten Porosität zum Gestatten des Fließens des Fluids hierdurch aufweist;
Auswählen eines Temperatursensors zum Erkennen der Temperatur des Fluidflusses durch die Einrichtung und zum Erzeugen eines Temperatursignals;
Auswählen mindestens eines Sensors zum Messen des Drucks des Fluids;
Auswählen eines Ventils zum Regeln des Fluidflusses;
Verarbeiten der Drosselinformationen mit dem Fluid zugewiesenen Verhaltensinformationen zum Erzeugen von Einrichtungsparametern; und
Herunterladen der Einrichtungsparameter in die Einrichtung, wobei die Einrichtungsparameter und das Temperatursignal die Einrichtung in die Lage versetzen, einen Fluss des Fluids innerhalb eines Bereichs von Umweltbedingungen zu überwachen und zu regeln.

2. Verfahren nach Anspruch 1, weiterhin mit dem Erhalten der Verhaltensdaten durch experimentelles Bestimmen eines Verhaltens des Fluids bei einer Mehrzahl von Absolutdrücken stromabwärts, Differenzdrücken und Temperaturen.

3. Verfahren nach Anspruch 2, **dadurch gekennzeichnet, dass** das experimentell bestimmte Verhalten durch Verwendung einer Testdrossel mit einer bekannten Flussrate bestimmt wird.

4. Verfahren nach Anspruch 1, **dadurch gekennzeichnet, dass** die Drossel anhand der Größe aus einer Mehrzahl von Drosseln ausgewählt wird.

5. Verfahren nach Anspruch 1, weiterhin mit dem Ausführen eines Drosseltests zum Bestimmen der Drosselinformationen für die ausgewählte Drossel.

6. Verfahren nach Anspruch 5, **dadurch gekennzeichnet, dass** das Ausführen des Drosseltests Folgendes aufweist:
Erhalten eines ersten Werts durch Testen der Drossel bei einem Nenndruck;
Erhalten eines zweiten Werts durch Testen der Drossel bei einem niedrigeren Druck als dem Nenndruck; und
Verwenden des ersten und zweiten Werts zum Identifizieren der Drosselinformationen,
wobei der erste und zweite Wert eine Charakterisierung des Drosselverhaltens gestatten.

7. Verfahren nach Anspruch 6, **dadurch gekennzeichnet, dass** der erste und zweite Wert Drosselinformationen sind.

8. Verfahren nach Anspruch 6, weiterhin mit dem Finden einer besten Übereinstimmung der Drosselinformationen mit den Verhaltensdaten.

9. Verfahren nach Anspruch 1, weiterhin mit dem Auswählen mindestens eines den Sensorparametern zugewiesenen Sensors, wobei die Sensorparameter bestimmt werden, indem eine Antwortkurve und ein Hysteresewert berechnet werden, die durch das Testen des Sensors über einen Bereich von Drücken erhalten wurden.

10. Verfahren nach Anspruch 1, **dadurch gekennzeichnet, dass** der Bereich von Umweltbedingungen eine Mehrzahl von Absolutdrücken stromabwärts enthält.

11. Verfahren nach Anspruch 1, **dadurch gekennzeichnet, dass** der Bereich von Umweltbedingungen eine Mehrzahl von Differenzdrücken enthält.

12. Verfahren nach Anspruch 1, **dadurch gekennzeichnet, dass** der Bereich von Umweltbedingungen eine Mehrzahl von Temperaturen enthält.

13. Verfahren nach Anspruch 1, weiterhin mit dem Auswählen des Fluids aus einer Mehrzahl von Fluiden, so dass die Komponenten- und Drosselinformationen nur mit Verhaltensdaten verarbeitet werden, die mit dem ausgewählten Fluid zugewiesen sind.

14. Verfahren nach Anspruch 1, weiterhin mit dem Folgenden:
Identifizieren von der Drossel zugewiesenen Drosselinformationen und von dem mindestens einen Sensor zugewiesenen Sensorinformationen, wobei die Drosselinformationen und Sensorinformationen Eigenschaften der Drossel bzw. des mindestens einen Sensors definieren;
Identifizieren von dem Fluid zugewiesenen Verhaltensinformationen;
Verarbeiten der identifizierten Drosselinformationen und Sensorinformationen mit den Verhaltensinformationen zum Erzeugen der Einrichtungsparameter für die Einrichtung, wobei
die Einrichtungsparameter und das Temperatursignal die Einrichtung zum Regeln des Fluids befähigen; und
Speichern der Betriebsdaten in einem für die Einrichtung zugänglichen Speicher.

15. Verfahren nach Anspruch 14, weiterhin mit dem Verifizieren der Betriebsdaten durch Ausführen eines Tests, wobei der Test mindestens einen bekannten Wert des Fluids verwendet, um das Genauigkeitsniveau der Einrichtung zu messen.

16. Verfahren nach Anspruch 14, weiterhin mit dem Abrufen der Drossel-, Sensor- und Verhaltensinformationen aus mindestens einer Datenbank.

17. Verfahren nach Anspruch 14, **dadurch gekennzeichnet, dass** die Verhaltensinformationen Daten aufweisen, die ein Verhalten des Fluids über einen Bereich von Absolutdrücken stromabwärts, Differenzdrücken und Temperaturen darstellen.

18. Verfahren nach Anspruch 17, **dadurch gekennzeichnet, dass** die Beziehung zwischen einer Massenflussrate des Fluids und einem Differenzdruck der Einrichtung nicht linear ist.

19. Verfahren nach Anspruch 1, weiterhin mit dem Charakterisieren der Drossel in Bezug auf einen Fluss mindestens eines Fluids, wobei das Verfahren Folgendes aufweist:
Messen eines ersten Druckabfalls der Drossel bei einem Nennfluss des Fluids;
Berechnen eines ersten Faktors basierend auf dem gemessenen Druckabfall;
Messen eines zweiten Druckabfalls der Drossel bei einem Bruchteil des Nennflusses; und
Berechnung eines zweiten Faktors basierend auf dem zweiten Druckabfall, wobei der erste und zweite Faktor ein Verhalten der Drossel charakterisiert.

20. Verfahren nach Anspruch 19, **dadurch gekennzeichnet, dass** das Berechnen des zweiten Faktors ebenfalls auf dem ersten Faktor und einem Nullachsenabschnitt (Englisch: "zero intercept") basiert.

21. Verfahren nach Anspruch 19, **dadurch gekennzeichnet, dass** der Bruchteil des Nennflusses die Hälfte des Nennflusses beträgt.

22. Verfahren nach Anspruch 19, weiterhin mit dem Zurückweisen der Drossel, falls mindestens einer der Faktoren des ersten und zweiten Faktors außerhalb eines vorbestimmten Bereichs liegt.

23. Verfahren nach Anspruch 19, weiterhin mit dem Darstellen der Drossel als Datenpunkt in einem zweidimensionalen Feld mit einer den Druck darstellenden ersten Achse und einer die Linearität darstellenden zweiten Achse, wobei ein Faktor des ersten und zweiten Faktors der ersten Achse und der andere Faktor der zweiten Achse zugewiesen ist.

24. Einrichtung zum Regeln eines Flusses mindestens eines Fluids, wobei die Einrichtung Folgendes aufweist:
eine Drossel zum Drosseln des Fluidflusses, wobei die Drossel eine Scheibe aus einem Material aufweist, wobei die Scheibe ein Metallmaterial mit einer vorbestimmten Porosität zum Gestatten des Fließens des Fluids hierdurch aufweist;
einen Prozessor;
ein für den Prozessor zum Regeln des Fluidflusses zugängliches Ventil;
mindestens einen Sensor zum Erzeugen von den Fluidfluss darstellenden Flussdaten;
wobei der mindestens eine Sensor einen Temperatursensor zum Messen der Temperatur des Fluidflusses und zum Herstellen eines Temperatursignals aufweist; und
wobei der mindestens eine Sensor einen Drucksensor zum Messen des Drucks des Fluids aufweist;
einen für den Prozessor zugänglichen Speicher, wobei der Speicher Folgendes aufweist:
der Drossel, dem Sensor und dem Fluid zugewiesene Einrichtungsdaten; und
durch den Prozessor auszuführende Befehle zum Empfangen der Flussdaten von dem Sensor, Berechnen einer Flussrate basierend auf den empfangenen Flussdaten und den Einrichtungsdaten und Aktivieren des Ventils, wobei der Grad der Aktivierung der berechneten Flussrate zugewiesen ist.

25. Verfahren nach Anspruch 24, **dadurch gekennzeichnet, dass** die Einrichtungsdaten verarbeitete Informationen aufweisen, die eine Beziehung zwischen physikalischen Parametern der Drossel und den Verhaltenseigenschaften des Fluids identifizieren.

26. Verfahren nach Anspruch 24, weiterhin mit einem Gehäuse, welches einen Sensor aufnehmen kann, wobei der Sensor eine Unterseite und eine Seitenfläche aufweist, wobei das Gehäuse Folgendes definiert:
erste und zweite Kanäle, die zum Bereitstellen eines Flusspfads des Fluids durch die Einrichtung in Flüssigkeitsverbindung stehen; und
eine zwischen dem ersten und zweiten Kanal angeordnete und im Wesentlichen durch den Sensor ausgefüllte Ausnehmung, wobei der Flusspfad durch die Ausnehmung durch eine erste Lücke, die durch eine Seitenfläche der Ausnehmung und die Seitenfläche des Sensors definiert wird, und eine zweite Lücke, die durch eine Unterseite der Ausnehmung und die Unterseite des Sensors definiert wird, definiert wird, so dass das Fluid von dem ersten Kanal in die Ausnehmung und von der Ausnehmung in den zweiten Kanal in einer im Wesentlichen nicht gekrümmter (Englisch: "unswept") Weise fließt.

## Revendications

1. Procédé pour construire un dispositif de débit massique destiné à être utilisé avec au moins un fluide, le procédé comprenant les étapes consistant à :
sélectionner un étrangleur, dans lequel l'étrangleur est associé à des informations d'étrangleur, et comprend un disque de matériau, dans lequel le disque comprend un matériau métallique ayant une porosité prédéterminée selon le fluide qui s'écoule à travers celui-ci ;
sélectionner un capteur de température pour détecter la température de l'écoulement de fluide à travers le dispositif et produire un signal de température ;
sélectionner au moins un capteur pour mesurer des pressions de fluide ;
sélectionner une soupape pour commander l'écoulement de fluide ;
traiter l'information d'étrangleur avec des données de comportement associées au fluide pour produire des paramètres de dispositif ; et
télécharger les paramètres de dispositif dans le dispositif, dans lequel les paramètres de dispositif et le signal de température permettent au dispositif de surveiller et de commander un écoulement du fluide sur une plage de conditions environnementales.

2. Procédé selon la revendication 1, comprenant en outre l'étape consistant à obtenir les données de comportement en déterminant expérimentalement un comportement du fluide à une pluralité de pressions aval absolues, de pression différentielles et de températures.

3. Procédé selon la revendication 2, dans lequel le comportement déterminé de manière expérimentale est déterminé en utilisant un étrangleur d'essai ayant un débit connu.

4. Procédé selon la revendication 1, dans lequel l'étrangleur est sélectionné par la taille à partir d'une pluralité d'étrangleurs.

5. Procédé selon la revendication 1, comprenant en outre l'étape consistant à exécuter un essai d'étrangleur pour déterminer l'information d'étrangleur pour l'étrangleur sélectionné.

6. Procédé selon la revendication 5, dans lequel l'étape consistant à exécuter l'essai d'étrangleur comprend les étapes consistant à :
obtenir une première valeur en testant l'étrangleur à une pression nominale ;
obtenir une seconde valeur en testant l'étrangleur à une pression inférieure à la pression nominale ; et
utiliser les première et seconde valeurs pour identifier l'information de l'étrangleur, dans lequel les première et seconde valeurs permettent la caractérisation du comportement de l'étrangleur.

7. Procédé selon la revendication 6, dans lequel les première et seconde valeurs sont les informations d'étrangleur.

8. Procédé selon la revendication 6, comprenant en outre l'étape consistant à trouver le meilleur ajustement de l'information d'étrangleur avec les données de comportement.

9. Procédé selon la revendication 1, comprenant en outre l'étape consistant à sélectionner au moins un capteur associé avec des paramètres de capteur, dans lequel les paramètres de capteur sont déterminés en calculant une courbe de réponse et une valeur d'hystérésis obtenue en testant le capteur sur une plage de pressions.

10. Procédé selon la revendication 1, dans lequel la plage de conditions environnementales comprend une pluralité de pressions aval absolues.

11. Procédé selon la revendication 1, dans lequel la plage des conditions environnementales comprend une pluralité de pressions différentielles.

12. Procédé selon la revendication 1, dans lequel la plage des conditions environnementales comprend une pluralité de températures.

13. Procédé selon la revendication 1, comprenant en outre l'étape consistant à sélectionner le fluide à partir d'une pluralité de fluides, de sorte que les informations de composant et d'étrangleur sont uniquement traitées avec des données de comportement associées au fluide sélectionné.

14. Procédé selon la revendication 1, comprenant en outre les étapes consistant à :
identifier les informations d'étrangleur associées aux informations d'étrangleur et de capteur associées avec au moins un capteur, dans lequel les informations d'étrangleur et de capteur définissent les propriétés de l'étrangleur et du au moins un capteur, respectivement ;
identifier les informations de comportement associées au fluide ;
traiter les informations d'étrangleur et de capteur identifiées avec les informations de comportement pour produire les paramètres de dispositif pour le dispositif, dans lequel les paramètres de dispositif et le signal de température permettent au dispositif de commander le fluide ; et
stocker les informations de fonctionnement dans une mémoire accessible au dispositif.

15. Procédé selon la revendication 14, comprenant en outre l'étape consistant à vérifier les données de fonctionnement en réalisant un essai, dans lequel l'essai utilise au moins une valeur de fluide connue pour mesurer un niveau de précision du dispositif.

16. Procédé selon la revendication 14, comprenant en outre l'étape consistant à récupérer les informations d'étrangleur, de capteur et de comportement d'au moins une base de données.

17. Procédé selon la revendication 14, dans lequel les informations de comportement comprennent des données représentant un comportement du fluide sur une plage de pressions aval absolues, de pressions différentielles et de températures.

18. Procédé selon la revendication 17, dans lequel une relation entre un débit massique du fluide et une pression différentielle du dispositif est non linéaire.

19. Procédé selon la revendication 1, comprenant en outre l'étape consistant à caractériser l'étrangleur par rapport à un écoulement d'au moins un fluide, le procédé comprenant les étapes consistant à :
mesurer une première chute de pression de l'étrangleur à un écoulement nominal du fluide ;
calculer un premier facteur basé sur la chute de pression mesurée ;
mesurer une seconde chute de pression de l'étrangleur sur une partie de l'écoulement nominal ; et
calculer un second facteur basé sur la seconde chute de pression, dans lequel lesdits premier et second facteurs caractérisent un comportement de l'étrangleur.

20. Procédé selon la revendication 19, dans lequel l'étape consistant à calculer le second facteur est également basée sur le premier facteur et une interception nulle.

21. Procédé selon la revendication 19, dans lequel la fraction de l'écoulement nominal représente la moitié de l'écoulement nominal.

22. Procédé selon la revendication 19, comprenant en outre l'étape consistant à rejeter l'étrangleur si au moins l'un parmi les premier et second facteurs se trouve à l'extérieur d'une plage prédéterminée.

23. Procédé selon la revendication 19, comprenant en outre l'étape consistant à représenter l'étrangleur à un point de données dans un réseau bidimensionnel ayant un premier axe représentant la pression et un second axe représentant la linéarité, dans lequel l'un parmi les premier et second facteurs est associé avec le premier axe et l'autre parmi les premier et second facteurs est associé au second axe.

24. Dispositif pour contrôler un écoulement d'au moins un fluide, le dispositif comprenant :
un étrangleur pour étrangler l'écoulement de fluide, dans lequel l'étrangleur comprend un disque de matériau ; dans lequel le disque comprend un matériau métallique ayant une porosité prédéterminée pour permettre au fluide de s'écouler à travers celui-ci ;
un processeur ;
une soupape accessible au processeur pour commander l'écoulement de fluide ;
au moins un capteur pour produire des données d'écoulement représentant l'écoulement de fluide ; dans lequel le au moins un capteur comprend un capteur de température pour mesurer la température de l'écoulement de fluide et produire un signal de température ; et
dans lequel le au moins un capteur comprend un capteur de pression pour mesurer des pressions des fluides ;
une mémoire accessible au processeur, dans lequel la mémoire comprend :
des données de dispositif associées à l'étrangleur, au capteur et au fluide ; et
des instructions pour le traitement par le processeur pour recevoir les données d'écoulement du capteur, calculer un débit basé sur les données d'écoulement reçues et les données de dispositif, et actionner la soupape, dans laquelle un degré d'actionnement est associé au débit calculé.

25. Dispositif selon la revendication 24, dans lequel les données de dispositif comprennent les informations traitées identifiant une relation entre des paramètres physiques de l'étrangleur et des caractéristiques de comportement du fluide.

26. Dispositif selon la revendication 24, comprenant en outre un boîtier pouvant être actionné pour recevoir un capteur, dans lequel le capteur comprend une surface inférieure et une surface latérale, le boîtier définissant :
des premier et second passages en communication de fluide pour prévoir une trajectoire d'écoulement pour le fluide à travers le dispositif ; et
une cavité disposée entre les premier et second passages et sensiblement remplie avec le capteur, dans lequel la trajectoire d'écoulement est définie à travers la cavité par un premier espace défini par une surface latérale de la cavité et la surface latérale du capteur, et par un second espace défini par une surface inférieure de la cavité et la surface inférieure du capteur, de sorte que le fluide s'écoule du premier passage dans la cavité et de la cavité dans le second passage, d'une manière sensiblement non balayée.
